# EUROPEAN PATENT APPLICATION

(11) **EP 3 226 568 A1**
(43) Date of publication of application: **04.10.2017**
(21) Application number: 17162426.5
(22) Date of filing: 22.03.2017
(51) Int. Cl.: H04N 21/422, G06F 3/023, G06F 3/048, H04N 5/44, H04N 21/431, H04N 21/485, H04N 21/482

(54) **DISPLAY DEVICE AND DISPLAY METHOD**

(30) Priority: 29.03.2016 KR 20160037869
(71) Applicant: Samsung Electronics Co., Ltd., Gyeonggi-do 16677 (KR)
(72) Inventor: NAOUR, Jean Christophe, Seoul (KR); JULIEN, Jae, Seoul (KR)
(74) Representative: Taor, Simon Edward William

(57) **Abstract**

Disclosed are a display device and a display method. The display device includes a display; and a controller configured to display a cursor at a location on the display corresponding to an input for controlling the display device, to detect that the cursor has entered an object region corresponding to an original location of an object displayed on the display, and to move the object toward the cursor that has entered the object region in response to detecting that the cursor has entered the object region.

## Description

The present disclosure relates generally to display devices and display methods, and for example, to display devices and display methods that provide object regions on a display.

Display devices have a function of displaying images that users may watch. Users may watch a broadcast program through a display device. The display device displays on a display a broadcast program selected by a user from among broadcast signals sent out from broadcasting stations. Currently, broadcasting is globally being converted from analog broadcasting to digital broadcasting.

Digital broadcasting signifies broadcasting digital images and sound signals. The digital broadcasting, compared to analog broadcasting, has less data loss due to its resilience to external noise, is advantageous in terms of error correction, has a high resolution, and provides a definitive image. Also, the digital broadcasting is capable of providing bi-directional services unlike in the case of analog broadcasting.

Also, smart TVs providing various types of content in addition to having a digital broadcasting function have been recently provided. Also, smart TVs implementing objects have been provided in order to reinforce interactivity with users and provide more information to users.

Also, to open a menu displayed on a screen or select an object, a user may use a pointing device. However, as display devices have recently become larger, a distance that the user has to navigate by using a cursor so as to select the object displayed on the screen may become relatively quite far. In particular, an operation of navigating the cursor through a large sized screen may be burdensome according to the competence or age of a user who uses the pointing device.

Display devices capable of providing a user interface capable of providing a more convenient and intuitive experience when a display device selects an object by using a pointing device and display methods are provided.

Additional aspects will be set forth in part in the description which follows and, in part, will be apparent from the description.

According to an aspect of an example embodiment, a display device includes a display; and a controller configured to display a cursor at a location on the display corresponding to an input for controlling the display device, to detect that the cursor has entered an object region corresponding to an original location of an object displayed on the display, and, to move the object toward the cursor that has entered the object region in response to the detection that the cursor has entered the object region.

The controller may be further configured to control the object to follow the cursor that moves in the object region.

The controller may be further configured to control the object overlay the cursor that has stopped in the object region.

The controller may be further configured to detect that the cursor has exited the object region, and, in response to the detection that the cursor has exited the object region, control the object move to an original location.

The object region may include a region within a predetermined region from an original location of the object displayed on the display.

The controller may be further configured to display the object at a determined location on the display in response to an input of a control device.

The controller may be further configured to remove the display of the cursor on the display in response to a detection that a predetermined time has elapsed without the cursor entering the object region.

According to an aspect of another example embodiment, a display method includes: displaying a cursor at a location on a display corresponding to an input of a control device controlling a display device; detecting that the cursor has entered an object region corresponding to an original location of an object displayed on the display; and moving the object toward the cursor that has entered the object region in response to the detection that the cursor has entered the object region.

According to an aspect of another example embodiment, a non-transitory computer readable storage medium having stored thereon a program, which when executed by a computer, performs a display method that includes displaying a cursor at a location on a display corresponding to an input of a control device controlling a display device; detecting that the cursor has entered an object region corresponding to an original location of an object displayed on the display; and moving the object toward the cursor that has entered the object region in response to the detection that the cursor has entered the object region.

These and/or other aspects, features and attendant advantages of the present disclosure will become apparent and more readily appreciated from the following detailed description, taken in conjunction with the accompanying drawings, in which like reference numerals refer to like elements, and wherein:
FIG. 1 is a diagram illustrating an example display device according to an example embodiment of the present disclosure;
FIG. 2 is a block diagram illustrating an example display device according to an example embodiment of the present disclosure;
FIG. 3 is a diagram illustrating an example display device according to an example embodiment of the present disclosure;
FIG. 4 is a flowchart illustrating an example display method performed by a display device, according to an example embodiment of the present disclosure;
FIG. 5A is a diagram illustrating an example operation when a cursor is outside an object region, according to an example embodiment of the present disclosure;
FIG. 5B is a diagram illustrating an example operation when a cursor enters a boundary of an object region, according to an example embodiment of the present disclosure;
FIG. 5C is a diagram illustrating an example operation when a cursor enters an object region, according to an example embodiment of the present disclosure;
FIG. 5D is a diagram illustrating an example operation when a cursor moves in an object region, according to an example embodiment of the present disclosure;
FIG. 5E is a diagram illustrating an example operation of selecting an object, according to an example embodiment of the present disclosure;
FIG. 5F is a diagram illustrating an example operation when a cursor exits an object region, according to an example embodiment of the present disclosure;
FIG. 5G is a diagram illustrating an example operation when a cursor exits an object region and an object goes back to an original location, according to an example embodiment of the present disclosure;
FIG. 6A is a diagram illustrating an example of a plurality of objects displayed on a screen and respective object regions, according to an example embodiment of the present disclosure;
FIG. 6B is a diagram illustrating another example of a plurality of objects displayed on a screen and respective object regions, according to an example embodiment of the present disclosure;
FIG. 6C is a diagram illustrating another example of a plurality of objects displayed on a screen and respective object regions, according to an example embodiment of the present disclosure;
FIG. 7A is a diagram illustrating an example screen that does not display both a cursor and an object since a user does not move a control device according to an example embodiment of the present disclosure;
FIG. 7B is a diagram illustrating an example operation when a cursor is outside an object region, according to an example embodiment of the present disclosure;
FIGS. 7C and 7D are diagrams illustrating example operations when a displayed cursor does not move and a certain time elapses, according to an example embodiment of the present disclosure;
FIG. 7E is a diagram illustrating an example operation when a cursor crosses a boundary of an object region to enter therein, according to an example embodiment of the present disclosure;
FIG. 7F is a diagram illustrating an example operation when a cursor enters an object region, according to an example embodiment of the present disclosure;
FIG. 7G is a diagram illustrating an example operation when a cursor exits an object region and crosses a boundary of another object region to enter therein, according to an example embodiment of the present disclosure; and
FIG. 7H is a diagram illustrating an example operation when a cursor completely enters an object region and an object goes back to an original location, according to an example embodiment of the present disclosure.

Reference will now be made in greater detail to various embodiments, examples of which are illustrated in the accompanying drawings, wherein like reference numerals refer to like elements throughout. Also, a structure of an electronic device and a method of operating the electronic device, according to an embodiment, will be described in greater detail with reference to the accompanying drawings.

It will be understood that, although the terms "first" and "second", etc., may be used herein to describe various components, these components should not be limited by these terms. These terms are only used to distinguish one component from another component. For example, a first component discussed below may be termed a second component without departing from the scope of the present disclosure. The term "and/or" includes any and all combinations of one or more of the associated listed items.

Herein, a selection of a key located in a control device may refer, for example, to pressing of the key, touching of the key, and/or dragging of the key, or the like, but embodiments are not limited thereto.

Content may include video, image, text, or web documents, or the like but embodiments are not limited thereto.

A portion of a display of a display device that outputs actual content may be referred to, for example, as a screen.

The terminology used herein is for the purpose of describing particular embodiments only and is not intended to be limiting of the present disclosure. As used herein, the singular forms 'a', 'an' and 'the' are intended to include the plural forms as well, unless the context clearly indicates otherwise. It will be further understood that the terms 'comprise' and/or 'comprising,' when used in this disclosure, specify the presence of stated features, integers, steps, operations, elements, and/or components, but do not preclude the presence or addition of one or more other features, integers, steps, operations, elements, components, and/or groups thereof. Expressions such as "at least one of," when preceding a list of elements, modify the entire list of elements and do not modify the individual elements of the list.

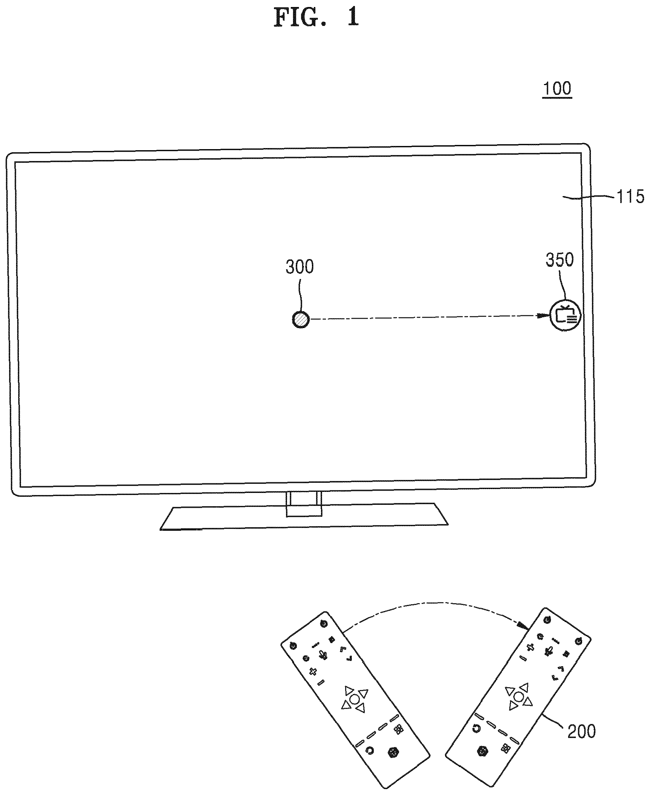

FIG. 1 is a diagram illustrating an example display device 100 according to an example embodiment of the present disclosure.

Referring to FIG. 1, the display device 100 may communicate with a control device 200 by wire or wirelessly.

The control device 200 may control the display device 100 by using short-range communication including infrared or Bluetooth. A user may operate the control device 200 to control functions of the display device 100 by using at least one of keys, buttons, a touchpad, a microphone receiving user's voice, and a sensor capable of recognizing a motion of the control device 200.

The control device 200 may include a power on/off button for turning the display device 100 on or off. The control device 200 may also be used for channel changing, volume control, selection of terrestrial broadcasting/cable broadcasting/satellite broadcasting, or setting of an environment of the display device 100, according to a user input.

Also, the control device 200 may transmit or receive signals with the display device 100 by using a wireless communicator. The wireless communicator may include a radio frequency (RF) module capable of transmitting or receiving signals with the display device 100 according to an RF communication standard and an infrared (IR) module capable of transmitting or receiving signals with the display device 100 according to an IR communication standard. The control device 200 may transmit a signal including information about a movement of the control device 200 to the display device 100 through the RF module.

The control device 200 may include a gyro sensor or an acceleration sensor. The gyro sensor may sense information about an operation of the control device 200 with respect to x, y, and z axes, thereby sensing information about a movement of the control device 200. The acceleration sensor may sense information about a movement speed of the control device 200. The control device 200 may further include a distance measurement sensor so that the distance measurement sensor may sense a distance between the control device 200 and the display device 100.

The control device 200 may transmit a signal corresponding to a predetermined key manipulation by a user or a signal corresponding to the movement of the control device 200 sensed by the sensor through the wireless communicator.

In the present embodiment, the term "user" may refer, for example, to a person who controls functions or operations of the display device 100 by using the control device 200 and may include a viewer, a manager, or an installer.

The display device 100 may be implemented as a flat display apparatus, a curved display apparatus having a curvature, or a flexible display apparatus having an adjustable curvature, or the like, but embodiments are not limited thereto. An output resolution of the display device 100 may include, for example, high definition (HD), full high definition (FHD), ultra HD (UHD), or a resolution higher than the UHD, or the like, but embodiments are not limited thereto.

The display device 100 may display at least one object on a display 115. An object 350 is illustrated in FIG. 1.

Objects may indicate content. The objects indicating content may include an object representing image content such as a movie or soap opera, an object representing audio content such as music, an object representing an application, an object representing a broadcasting channel, an object representing history information of content executed by a user, etc.

The plurality of objects may be displayed as images. For example, when an object represents content regarding a movie or soap opera, the object may be displayed as a poster image of the movie or soap opera. Also, when an object represents audio content such as music, the object may be displayed as a poster image of a music album. Also, when an object represents an application, the object may be displayed as an image presenting the application or a finally executed application screen. Also, when an object represents a broadcasting channel, the object may be displayed as a screen image that a user most recently viewed in the broadcasting channel or an image representing a program currently being broadcast in the broadcasting channel. Also, when an object represents history information of content executed by the user, the object may be displayed as a most recently executed screen image of the content.

Also, objects may represent interfaces for interfacing between the display device 100 and an external device or may represent the external device interfaced with the display device 100. For example, the interface for interfacing between the display device 100 and the external device may be an object representing a port of an image display device interfaced with the external device. For example, the object representing the external device may include an object representing a high definition multimedia interface (HDMI) port, an object representing a component jack, an object representing a personal computer (PC) port, an object representing a universal serial bus (USB) port, etc. Also, the object representing the external device may be the object representing the external device connected through the interface.

An object may be referred to as a menu, an icon, an item, or the like.

The single object 350 is illustrated in FIG. 1 but two or more objects may be provided.

According to an example embodiment, the display device 100 may control one or more objects based on an input from the control device 200 implemented as a pointing device.

Referring to FIG. 1, a cursor 300 may be displayed on a screen of the display 115 corresponding to a pointing location.

It is merely an example that the cursor 300 of FIG. 1 has a circular shape. It will be apparent to one of ordinary skill in the art that a cursor may have various shapes. The cursor 300 may be referred to an indicator used to show a location on a computer monitor or a display device, in response to a key input of a computing device or a pointing device. An indicator used to show a location on a display in response to an input of a pointing device such as a mouse, etc. may be mainly referred to as a pointer. Referring to FIG. 1, if a user moves the control device 200 on the screen of the display 115, the cursor 300 may be displayed on the screen of the display 115 in correspondence to a location indicated by the control device 200.

For example, if a signal is received that a user's finger touches a touch pad provided in a center portion of the control device 200 implemented as the pointing device, the display device 100 may be initialized to operate in a pointing mode and may display the cursor 300 on the display 115. While the user's finger touches the touch pad, if the user moves the control device 200, a motion sensor, an acceleration sensor, or a gyro sensor provided in the control device 200 may sense a movement of the control device 200 and output a value of the motion sensor corresponding to the sensed movement. A controller of the control device 200 may control a communicator to transmit the output value of the motion sensor to the display device 100. The display device 100 may determine a location of the cursor 300 based on the output value of the motion sensor received from the control device 200 and may display the location of the cursor 300 on the display 115. Also, for example, if the touch pad of the control device 200 is pressed by applying a physical force in a manner of pressing a general button, a switch provided below the touch pad may operate and thus the switch may be used as an input of selecting a specific object.

Also, the control device 200 implementing a pointing function may be implemented without a touch pad. For example, the value of the motion sensor corresponding to a movement of the control device 200 may be output by merely gripping and moving the control device 200, thereby implementing the pointing device.

Referring to FIG. 1, the user may move the cursor 300 on the display 115 by moving the control device 200. To select the object 350 displayed on the screen, the user has to conventionally move the control device 200 in order to move the cursor 300 to a location of the object 350. However, as the display 115 of the display device 100 is larger, a distance that the user moves the cursor 300 so as to select the object 350 may have to be increased.

According to an embodiment, the object 350 displayed on the display 115 may not be fixed to an original location but may move according to a movement of the cursor 300.

According to an embodiment, if the user moves the cursor 300 using the control device 200, the object 350 may move toward the cursor 300 so as to be selected by the cursor 300.

According to an embodiment, if the user moves the cursor 300 in a direction of the object 350 using the control device 200, the object 350 may move in a direction of the cursor 300.

According to an embodiment, if the user moves the cursor 300 using the control device 200, when the cursor 300 enters a previously determined object region in correspondence to an original location of the object 350, the object 350 may move toward the cursor 300.

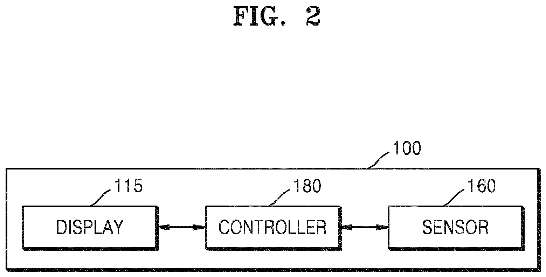

FIG. 2 is a block diagram illustrating an example display device 100 according to an example embodiment of the present disclosure.

Referring to FIG. 2, the display device 100 may include the display 115, a controller (e.g., including processing circuitry) 180, and a sensor 160.

The sensor 160 may sense an input from the control device 200.

According to an embodiment, the sensor 160 may sense the input of the control device 200 corresponding to a movement of the control device 200.

The display 115 may output a cursor on a screen corresponding to the input of the control device 200 under control of the controller 180.

Also, the display 115 may output at least one object on the screen in correspondence to the input of the control device 200.

The controller 180 may include various processing circuitry and receive a signal corresponding to a pointing location of the control device 200 received through the sensor 160 and control the display 115 to determine and display a location of the cursor according to the signal corresponding to the pointing location.

According to an embodiment, the controller 180 may display the cursor at a location corresponding to the input of the control device 200 controlling the display device 100 on the display 115, detect that the cursor has entered a predetermined object region in correspondence to an original location of the object displayed on the display, and, in response to the detection that the cursor has entered the object region, may display the object as moving toward the cursor that has entered the object region.

According to an embodiment, the controller 180 may display the object as following the cursor moving in the object region.

According to an embodiment, the controller 180 may display the object as overlaying the cursor that stops in the object region.

According to an embodiment, the controller 180 may detect that the cursor has exited the object region, and, in response to the detection that the cursor has exited the object region, display the object as moving to the original location.

The object region may include a region within a predetermined range from the original location of the object displayed on the display 115.

According to an embodiment, the controller 180 may display the object at the determined location of the display 115 in response to the input of the control device 200.

According to an embodiment, the controller 180 may remove the display of the cursor on the display 115 in response to a detection that a predetermined time has elapsed without the cursor entering the object region.

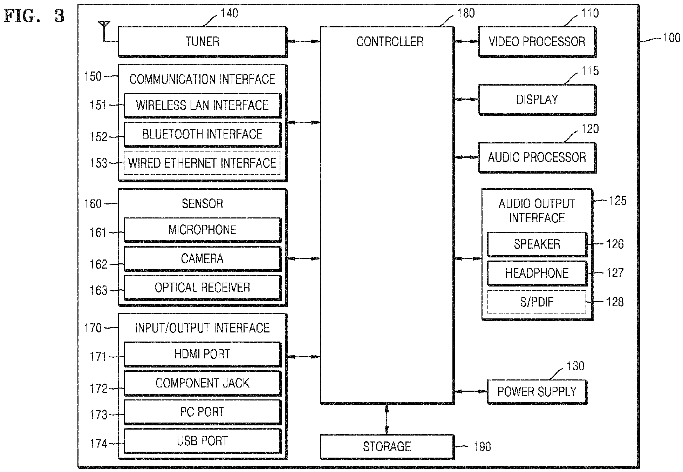

FIG. 3 is a block diagram illustrating the example display device 100 according to an example embodiment of the present disclosure.

Referring to FIG. 3, the display device 100 may include a video processor (e.g., including video processing circuitry) 110, the display 115, an audio processor (e.g., including audio processing circuitry) 120, an audio output interface (e.g., including audio output interface circuitry) 125, a power supply 130, a tuner 140, a communication interface (e.g., including communication circuitry) 150, the sensor 160, an input/output interface (e.g., including input/output circuitry) 170, the controller (e.g., including processing circuitry) 180, and a storage 190.

The video processor 110 may include various video processing circuitry to process video data received by the display device 100. The video processor 110 may perform various types of image processing, such as decoding, scaling, noise filtering, frame rate conversion, and resolution conversion, on the video data.

The display 115 may display video included in a broadcast signal received through the tuner 140 on a screen under control of the controller 180. The display 115 may also display content, for example, a moving image, input through the communication interface 150 or the input/output interface 170. The display 115 may display an image stored in the storage 190 under control of the controller 180.

According to an embodiment, the display 115 may display a cursor on the display in correspondence to an input according to a pointing mode of the control device 200 under control of the controller 180.

According to an embodiment, the display 115 may display one or more objects at a predetermined location on the screen in response to an input of the control device 200 under control of the controller 180.

The audio processor 120 may include various audio processing circuitry to process audio data. The audio processor 120 may perform various types of processing, such as, for example, and without limitation, decoding, amplification, and noise filtering, on the audio data. The audio processor 120 may include a plurality of audio processing modules including various audio processing circuitry for processing audio corresponding to a plurality of types of content.

The audio output interface 125 may include various audio output circuitry to output audio included in the broadcast signal received through the tuner 140 under control of the controller 180. The audio output interface 125 may output audio, for example, a voice or sound, input through the communication interface 150 or the input/output interface 170. The audio output interface 125 may output audio stored in the storage 190 under control of the controller 180. The audio output interface 125 may include various audio output circuitry, such as, for example, and without limitation, at least one of a speaker 126, a headphone output terminal 127, and a Sony/Philips digital interface (S/PDIF) output terminal 128. The audio output interface 125 may include a combination of the speaker 126, the headphone output terminal 127, and the S/PDIF output terminal 128.

The power supply 130 may supply power input from an external power source to the internal components 110 through 190 of the display device 100 under control of the controller 180. The power supply 130 may supply power input from one or more batteries (not shown) located inside the display device 100 to the internal components 110 through 190 under control of the controller 180.

The tuner 140 may receive a broadcast signal received via wire or wirelessly and having undergone amplification, mixing, resonance, and the like, and tune and select only a frequency of a channel that the display device 100 desires to receive from among many electronic waves of the received broadcast signal. The broadcast signal may include audio, video, and additional information (e.g., an electronic program guide (EPG)).

The communication interface 150 may include various communication circuitry to connect the display device 100 to external apparatuses, for example, an audio apparatus, under the control of the controller 180. The controller 180 may transmit/receive content with respect to the external apparatuses connected via the communication interface 150, download applications from the external apparatuses, or enable web browsing. The communication interface 150 may include various communication circuitry, such as, for example, and without limitation, one or more of a wireless local area network (LAN) interface 151, a Bluetooth interface 152, and a wired Ethernet interface 153 according to the performance and structure of the display device 100. Also, the communication interface 150 may include a combination of the wireless LAN interface 151, the Bluetooth interface 152, and the wired Ethernet interface 153. The communication interface 150 may receive the control signal of the control device 200, under the control of the controller 180. The control signal may be embodied in a Bluetooth signal, an RF signal, or a WiFi signal.

The communication interface 150 may further include other communication circuitry, such as, for example, and without limitation, short-distance communication interfaces (e.g., a near-field communication (NFC) interface (not shown) and a Bluetooth low energy (BLE) interface (not shown)) besides the Bluetooth interface 152.

The sensor 160 may sense a voice of the user, an image of the user, or an interaction of the user.

A microphone 161 may receive a voice uttered by the user. The microphone 161 may convert the received voice into an electrical signal and output the converted electrical signal to the controller 180. The voice of the user may include, for example, a voice corresponding to a menu or a function of the display device 100.

A camera 162 may receive an image, for example, continuous frames, corresponding to a motion of the user including a gesture within a camera recognition range. The motion of the user may include, for example, motion using any body part of the user, such as the face, hands, feet, etc. The camera 162 may convert the received image into an electrical signal and output the converted electrical signal to the controller 180 under control of the controller 180.

The controller 180 may include various processing circuitry and select a menu displayed on the display device 100 by using a recognition result of the received motion or perform a channel adjustment, a volume adjustment, or a movement of an indicator corresponding to the motion recognition result.

The camera 162 may include a lens and an image sensor (not shown). The camera 162 may support optical zoom or digital zoom by using a plurality of lenses and image processing. The recognition range of the camera 162 may be variously set according to an angle of the camera 162 and an ambient environment condition. When the camera 162 includes a plurality of cameras, a three- dimensional (3D) still image or a 3D motion may be received using the plurality of cameras.

An optical receiver 163 may receive an optical signal (including a control signal) received from the control device 200 through an optical window (not shown) of a bezel of the display 115. The optical receiver 163 may receive the optical signal corresponding to a user input (e.g., a touch, a push, a touch gesture, a voice, or a motion) from the control device 200. The control signal may be extracted from the received optical signal under control of the controller 180.

According to an embodiment, the optical receiver 163 may receive a signal corresponding to a pointing location of the control device 200 and may transmit the signal to the controller 180. For example, if a user moves the control device 200 while touching a touch pad 203 provided in the control device 200 with a user's finger, the optical receiver 163 may receive a signal corresponding to a movement of the control device 200 and may transmit the signal to the controller 180.

According to an embodiment, the optical receiver 163 may receive a signal indicating that a specific button provided in the control device 200 is pressed and may transmit the signal to the controller 180. For example, if the user presses the button type touch pad 203 provided in the control device 200 with the user's finger, the optical receiver 163 may receive a signal indicating that the button type touch pad 203 is pressed and may transmit the signal to the controller 180. For example, the signal indicating that the button type touch pad 203 is pressed may be used as a signal for selecting one of objects.

The input/output interface 170 may include various input/output interface circuitry to receive video (e.g., a moving picture, etc.), audio (e.g., a voice or music, etc.), and additional information (e.g., an EPG, etc.), and the like from the outside of the display device 100 under control of the controller 180. The input/output interface 170 may include various input/output circuitry, such as, for example, and without limitation, one or more of a high definition multimedia interface (HDMI) port 171, a component jack 172, a PC port 173, and a USB port 174. The input/output interface 170 may include a combination of the HDMI port 171, the component jack 172, the PC port 173, and the USB port 174.

It will be easily understood to one of ordinary skill in the art that a configuration and operation of the input/output interface 170 may be variously implemented according to embodiments.

The controller 180 may include various processing circuitry to control a general operation of the display device 100 and a signal flow between the internal components 110 through 190 of the display device 100 and process data. If a user input exists, or a preset and stored condition is satisfied, the controller 180 may execute an OS and various applications stored in the storage 190.

The controller 180 may include, for example, and without limitation, a processor.

The processor may include a graphics processing unit (GPU) (not shown) for processing graphics corresponding to video. The processor may be implemented by a system on chip (SoC) in which a core (not shown) and a GPU (not shown) are integrated. The processor may also include a single core, a dual core, a triple core, a quad core, and a multiple core.

The processor may also include a plurality of processors. For example, the processor may be implemented as a main processor (not shown) and a sub processor (not shown) operating in a sleep mode.

The controller 180 may receive pointing location information of the control device 20 through at least one of the optical receiver 163 and a panel key located in one of side and rear surfaces of the display device 100.

According to an embodiment, the controller 180 may execute one or more instructions stored in the storage 190, detect that a cursor has entered a predetermined object region in correspondence to an original location of an object displayed on the display, and, in response to a detection that the cursor has entered the object region, may display the object to move toward the cursor that has entered the object region.

It will be easily understood to one of ordinary skill in the art that a configuration and operation of the controller 180 may be variously implemented according to embodiments.

The storage 190 may store various data, programs, or applications for operating and controlling the display device 100 under control of the controller 180. The storage 190 may store signals or data input/output in correspondence with operations of the video processor 110, the display 115, the audio processor 120, the audio output interface 125, the power supply 130, the tuner 140, the communication interface 150, the sensor 160, and the input/output interface 170. The storage 190 may store control programs for controlling the display device 100 and the controller 180, applications initially provided from a manufacturer or downloaded from the outside, graphic user interfaces (GUIs) related to the applications, objects (e.g., images, text, icons, and buttons) for providing the GUIs, user information, documents, databases (DBs), or related data.

According to an embodiment, the term "storage" may include a read-only memory (ROM), a random-access memory (RAM), or a memory card (not shown), for example, a micro SD card or a USB memory, provided in the display device 100. Also, the storage 190 may include non-volatile memory, volatile memory, hard disk drives (HDDs), or solid state drives (SSDs).

According to an embodiment, the storage 190 may include one or more instructions to detect that the cursor has entered the predetermined object region in correspondence to the original location of an object displayed on the display, and, in response to the detection that the cursor has entered the object region, display the object to move toward the cursor that has entered the object region.

According to an embodiment, the storage 190 may store an image corresponding to each object.

According to an embodiment, the storage 190 may store an image corresponding to a cursor that is output in correspondence to a pointing location of the control device 200.

The display device 100 including the display 115 may be electrically connected to a separate external device (for example, a set-top box (not shown)) having a tuner. For example, the display device 100 may be implemented as an analog television (TV), a digital TV, a 3D TV, a smart TV, a light emitting diode (LED) TV, an organic light emitting diode (OLED) TV, a plasma TV, a monitor, a set-top box, or the like, but it will be apparent to one of ordinary skill in the art to which the present disclosure pertains that the display device 100 of embodiments is not limited thereto.

The display device 100 may include a sensor (for example, an illumination sensor, a temperature sensor, etc.) sensing an internal or external state thereof.

At least one component may be added to or deleted from the components (for example, 110 through 190) shown in the display device 100 of FIG. 3 according to a performance of the display device 100. Also, it will be easily understood to one of ordinary skill in the art that locations of the components (for example, 110 through 190) may be changed according to the performance or a structure of the display device 100.

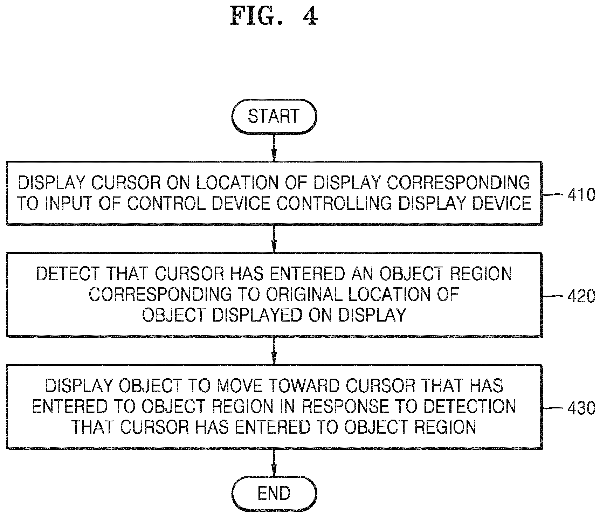

FIG. 4 is a flowchart illustrating an example display method performed by the display device 100 according to an example embodiment of the present disclosure.

Referring to FIG. 4, in operation 410, the display device 100 may display a cursor on a location of a display corresponding to an input of the control device 200 controlling the display device 100.

For example, if a user holds and starts moving the control device 200, the display device 100 may display the cursor on the location of the display by receiving a signal corresponding to a movement of the control device 200. Also, the display device 100 may display the cursor on a coordinate location of the display calculated in correspondence to the movement of the control device 200.

According to an embodiment, the display device 100 may display one or more objects on a predetermined location of the display corresponding to an input of the control device 200.

For example, if the user holds and starts moving the control device 200, the display device 100 may display the one or more objects on the predetermined location of the display by receiving a signal corresponding to the movement of the control device 200.

In operation 420, the display device 100 may detect that the cursor has entered a predetermined object region corresponding to an original location of an object displayed on the display.

The display device 100 may move the cursor to the coordinate location on the display calculated (determined) corresponding to the movement of the control device 200 when the user holds and moves the control device 200.

According to an embodiment, an object region may be determined in advance corresponding to an original location of each of one or more objects displayed on a screen of the display device 100.

For example, the object region may include a region within a certain radius from an original location of an object. The object region may include a randomly determined region around the original location of the object. When two or more objects are displayed on the screen, object regions corresponding to the respective objects may have different shapes and sizes.

When the cursor is outside the object region, an object within the object region may not move but may be fixed. When the cursor moves within the object region, the object may move according to a movement of the cursor. Thus, the object region may be a region in which the object follows the cursor and moves like a magnet according to the movement of the cursor.

The display device 100 may store information about the predetermined object region therein. The display device 100 may track a coordinate value of the cursor moving on the screen and may detect that the coordinate value of the cursor has entered the object region by using the stored information about the object region.

In operation 430, the display device 100 may display the object to move toward the cursor that has entered the object region in response to a detection that the cursor has entered the object region.

According to an embodiment, the display device 100 may display the object to follow the cursor like a magnet if the cursor moves in the object region.

According to an embodiment, the display device 100 may display the object to overlay with a location of the cursor if the cursor stops moving in the object region.

According to an embodiment, the display device 100 may execute a user interface or content corresponding to the object according to an input of the control device 200 selecting the object while the object is overlaid with the cursor. For example, when the object is an object corresponding to an EPG, if the user selects the object, the display device 100 may display a user interface indicating the EPG. For example, when the object is an object corresponding to a control function of the display device 100, if the user selects the object, the display device 100 may display a user interface displaying the control function of the display device 100. For example, when the object is an object corresponding to execution of content, if the user selects the object, the display device 100 may execute content. Executing the content may include reproducing audio visual data or executing an application.

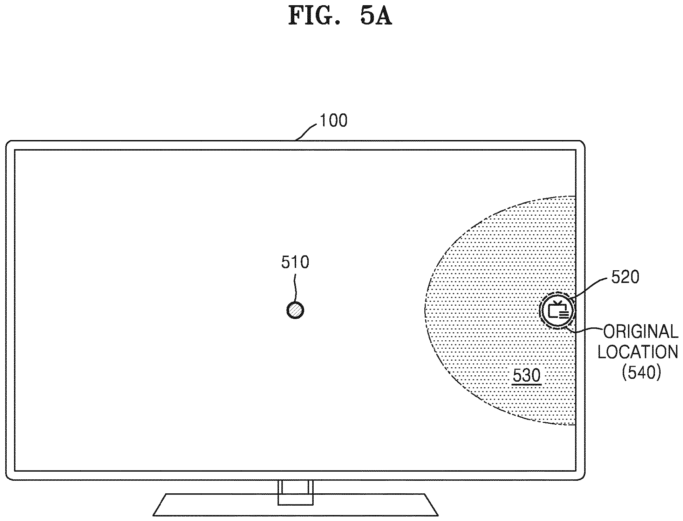

Operations 410, 420, 430 of FIG. 4 will be described in greater detail below with reference to FIGS. 5A through 5G.

FIG. 5A is a diagram illustrating an example operation when a cursor 510 is outside an object region 530 according to an example of the present disclosure embodiment.

Referring to FIG. 5A, the display device 100 may display the cursor 510 corresponding to an input of the control device 200 and an object 520 on a screen of a display.

The object 520 may be at an original location 540 thereof. The object region 530 may be determined in a predetermined region corresponding to the original location 540 of the object 520. The object region 530 may be determined as a region within a certain range from the original location 540 of the object 520. The certain range may be determined in various ways. Although the object region 530 is shaded in FIG. 5A for convenience of description, the object region 530 is actually stored as information about location of the object region on the display device 100 and may not be displayed on the screen, such that users may not distinguish the object region 530 from other region than the object region 530 on the screen.

As illustrated in FIG. 5A, when the cursor 510 is outside the object region 530, the object 520 inside the object region 530 may not be influenced and may be fixed to the original location 540 thereof.

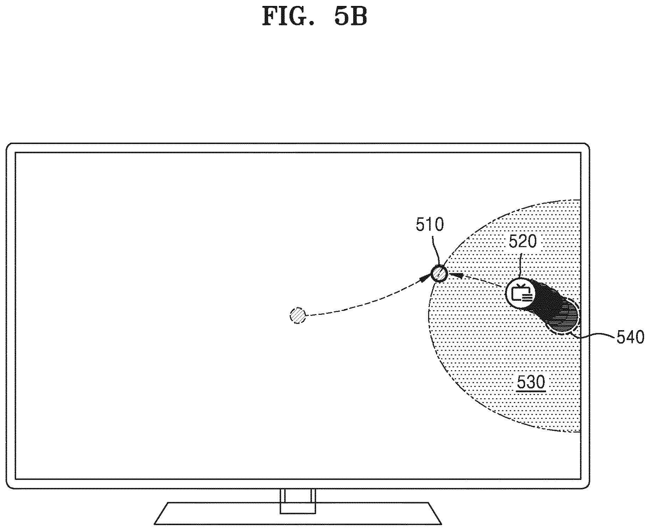

FIG. 5B is a diagram illustrating an example operation when the cursor 510 enters a boundary of the object region 530 according to an example embodiment of the present disclosure.

Referring to FIG. 5B, when a user moves the cursor 510 by using the control device 200 and thus the cursor 510 enters the boundary of the object region 530, the display device 100 may detect that the cursor 510 has entered the object region 530. As described above, in response to a detection that the cursor 510 has entered the object region 530, the display device 100 may display the cursor 510 to move toward the object 510. Referring to FIG. 5B, the object 520 left the original location 540 of the object 520 and is moving toward the object 510.

As described above, if an object region that a cursor follows an object is defined, if the user approaches a certain range from the object 520 without having to precisely moving the cursor 510 to a location of the object 520, the object 520 may actively follow a location of the cursor 510, thereby increasing user convenience in manipulating the cursor 510 and providing the user with an interesting experience of animation.

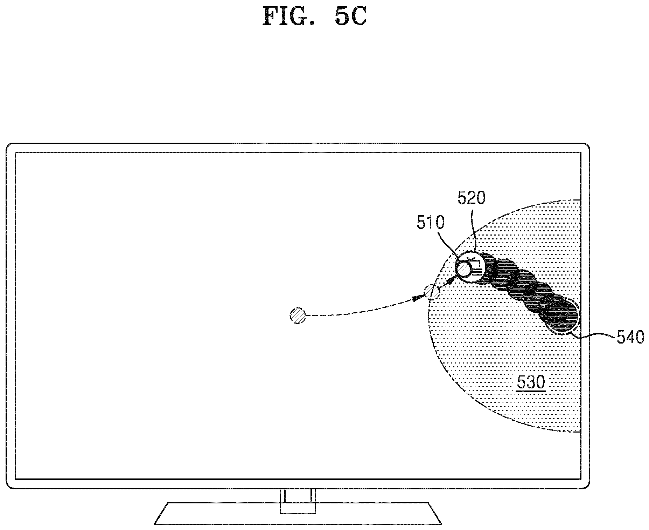

FIG. 5C is a diagram illustrating an example operation when the cursor 510 enters the object region 530 according to an example embodiment of the present disclosure.

Referring to FIG. 5C, when a user moves the cursor 510 into the object region 530 by using the control device 200 and thus the cursor 510 moves into the object region 530, the display device 100 may display the object 520 to follow the cursor 510 corresponding to a movement of the cursor 510.

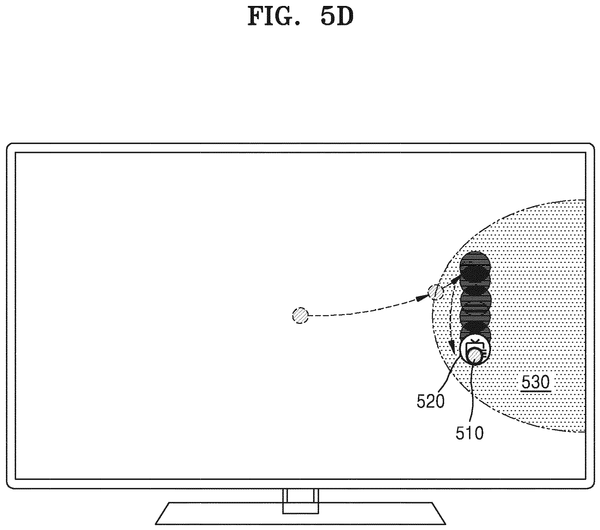

FIG. 5D is a diagram illustrating an example operation when the cursor 510 moves in the object region 530, according to an example embodiment of the present disclosure.

Referring to FIG. 5D, as illustrated in FIG. 5C, the object 520 may follow the cursor 510 like a magnet based on a movement of the cursor 510 in the object region 530. A display of the object 520 following the cursor 510 on a screen may be determined in various ways. When the object 520 follows the cursor 510, the object 520 may be displayed by being overlaid with the cursor 510 and following the cursor 510 at a certain distance.

When the cursor 510 stops moving in the object region 530, the display device 100 may display the object 520 to be overlaid with a location of the cursor 510. If the cursor 510 stops moving in the object region 530, and the user selects the object 520 by using the control device 200, the display device 100 may receive a selection signal and may output a user interface corresponding to execution of the object 520.

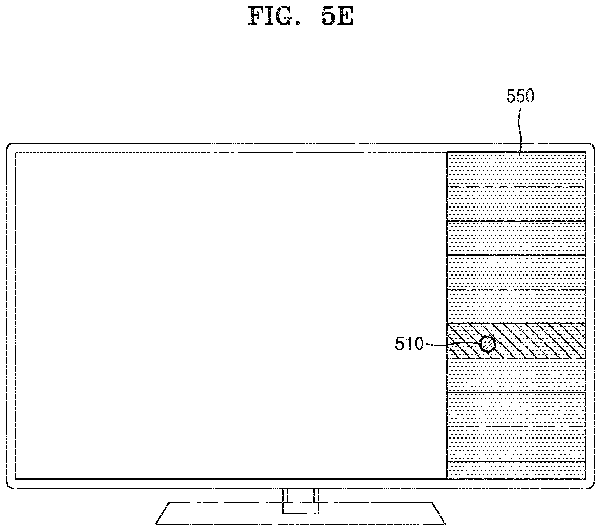

FIG. 5E is a diagram illustrating an example operation of selecting the object 520 according to an example embodiment of the present disclosure.

Referring to FIG. 5E, while the cursor 510 is located at the object 520, if a user enters an input of selecting the object 520 by using the control device 200, the display device 100 may output a user interface 550 corresponding to the object 520. The user interface 540 may include a plurality of menu bars according to an example.

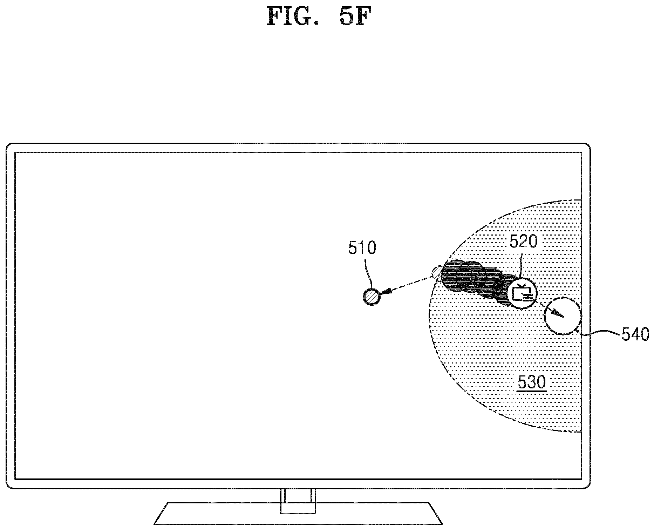

FIG. 5F is a diagram illustrating an example operation when the cursor 510 escapes from the object region 530 according to an example embodiment of the present disclosure.

Referring to FIG. 5F, if a user moves the cursor 510 to escape from the object region 530 by using the control device 200, the display device 100 may move the object 520 to the original location 540. In FIG. 5F, the object 520 is moving toward the original location 540 thereof.

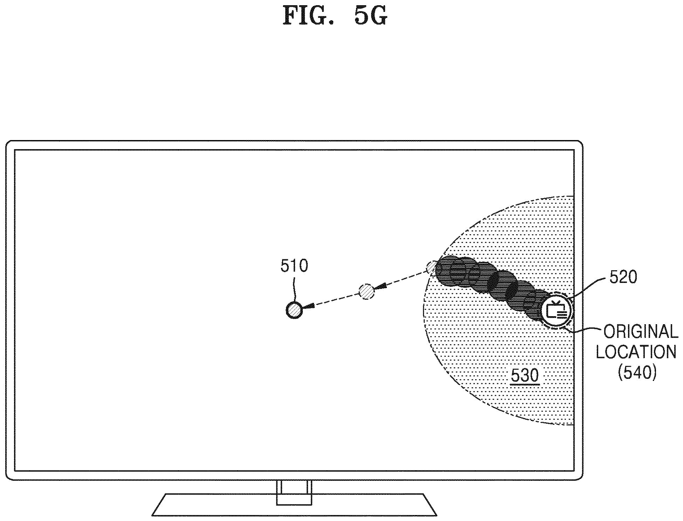

FIG. 5G is a diagram illustrating an example operation when the cursor 510 escapes from the object region 530 and the object 520 goes back to the original location 540 according to an example embodiment of the present disclosure.

Referring to FIG. 5G, the cursor 510 moves further compared to FIG. 5F, and the object 520 moves back to the original location 540 thereof.

According to an embodiment, one or more objects may be displayed on a screen of the display device 100 and one or more object regions may be defined in correspondence to the one or more objects.

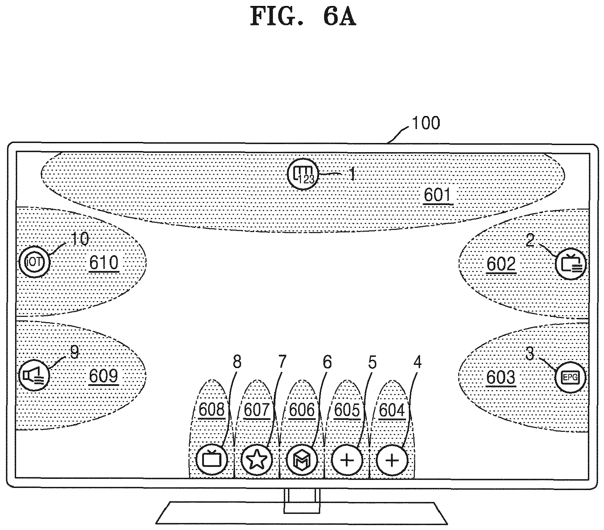

FIG. 6A is a diagram illustrating an example of a plurality of objects 1 through 10 displayed on a screen and respective object regions 601 through 610 according to an example embodiment of the present disclosure.

Referring to FIG. 6A, the display device 100 may display the objects 1 through 10. The display device 100 may store information about the previously designated object regions 601 through 610 in correspondence to the respective objects 1 through 10. Shapes and sizes of the object regions 601 through 610 may be differently defined.

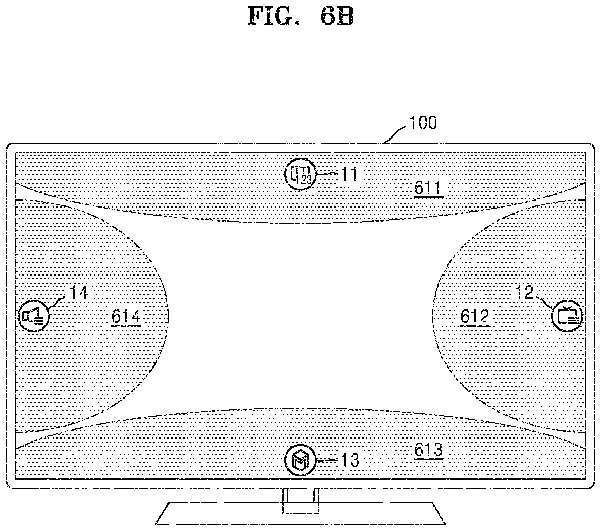

FIG. 6B is a diagram illustrating another example of a plurality of objects 11 through 14 displayed on a screen and respective object regions 611 through 614 according to an example embodiment of the present disclosure.

Referring to FIG. 6B, the display device 100 may display the objects 11 through 14. The display device 100 may store information about the previously designated object regions 611 through 614 in correspondence to the respective objects 11 through 14. Shapes and sizes of the object regions 611 through 614 may be differently defined.

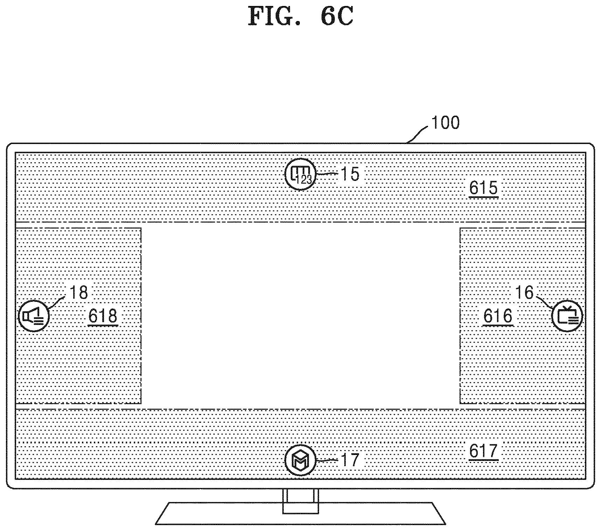

FIG. 6C is a diagram illustrating another example of a plurality of objects 15 through 18 displayed on a screen and respective object regions 615 through 618 according to an example embodiment of the present disclosure.

Referring to FIG. 6C, the display device 100 may display the objects 15 through 18. The display device 100 may store information about the previously designated object regions 615 through 618 corresponding to the respective objects 15 through 18. Shapes and sizes of the object regions 615 through 618 may be differently defined.

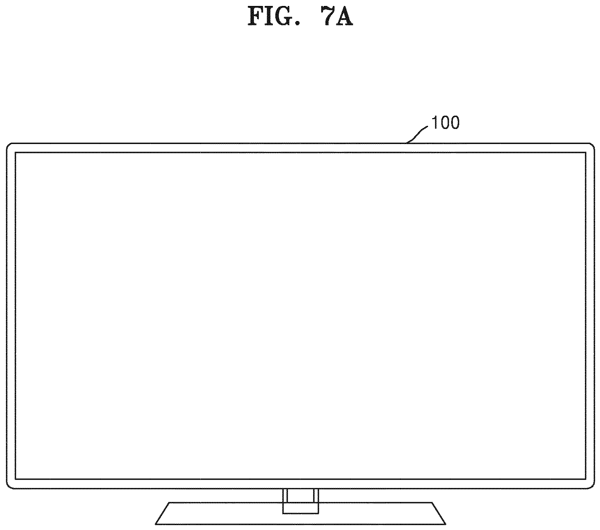

An operation on a screen that displays a plurality of objects will now be described in greater detail with reference to FIGS. 7A through 7H below.

FIG. 7A is a diagram illustrating an example screen that does not display both a cursor and an object since a user does not move a control device according to an example embodiment of the present disclosure.

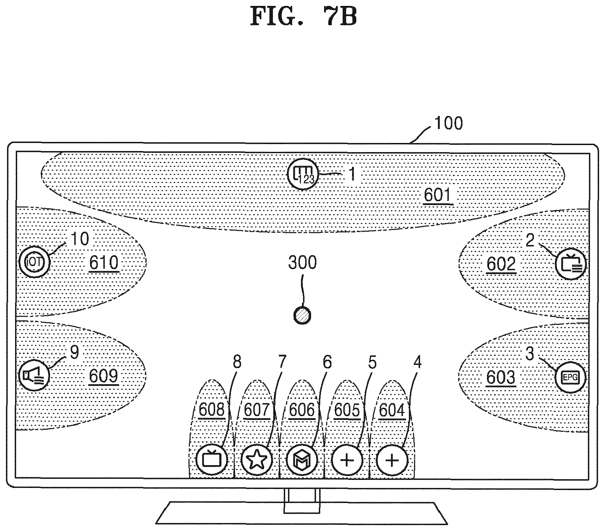

In a state of the screen illustrated in FIG. 7A, if a user starts moving the control device 200, the display device 100 may display the cursor and one or more object on the screen. FIG. 7B illustrates an example of displaying the cursor and the one or more objects on the screen according to a movement of the control device 200.

FIG. 7B is a diagram illustrating an example operation when a cursor 300 is outside an object region according to an example embodiment of the present disclosure.

Referring to FIG. 7B, the display device 100 may display the cursor 300 and a plurality of objects 1 through 10 on a screen by sensing a movement of the control device 200. For example, no matter what the screen of the display device 100 displays nothing or is reproducing content, the display device 100 may not display either the cursor 300 or the objects 1 through 10 before sensing the movement of the control device 200.

According to an embodiment, the display device may display the cursor 300 and the plurality of objects 1 through 10 if sensing the movement of the control device 200.

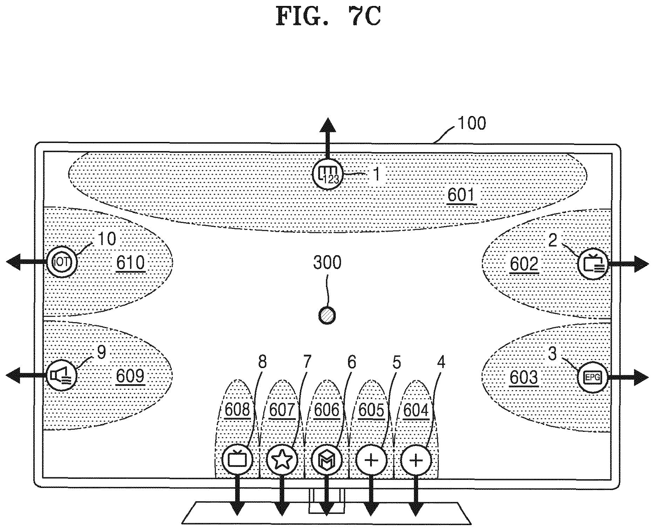

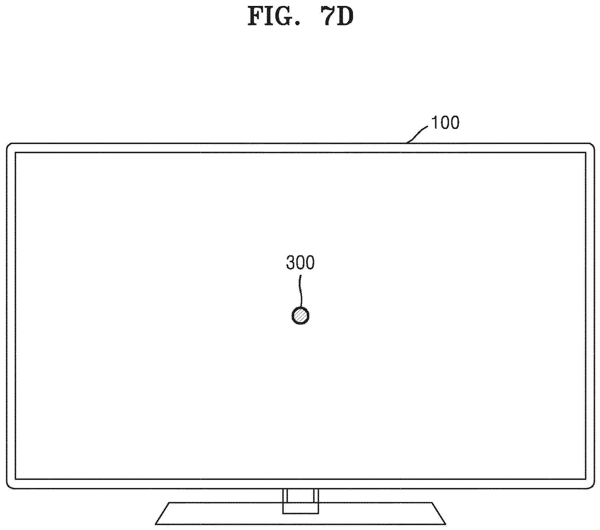

FIGS. 7C and 7D are diagrams illustrating example operations when the displayed cursor 300 does not move and a certain time elapses, according to an example embodiment of the present disclosure.

While the cursor 300 and the plurality of objects 1 through 10 are displayed on a screen of the display device 100 as illustrated in FIG. 7B, when a user no longer manipulates the control device 200 and thus, the certain time elapses without a movement of the cursor 300, the display device 100 may remove the display of the objects 1 through 10 from the screen as illustrated in FIGS, 7C and 7D.

Thus, referring to FIG. 7D, when the certain time elapses without any manipulation by the user with respect to the control device 200, the objects may disappear and only the cursor 300 may remain displayed. Alternatively, when the certain time elapses without any manipulation by the user with respect to the control device 200, the display device 100 may remove the display of the objects 1 through 10 and the cursor 300.

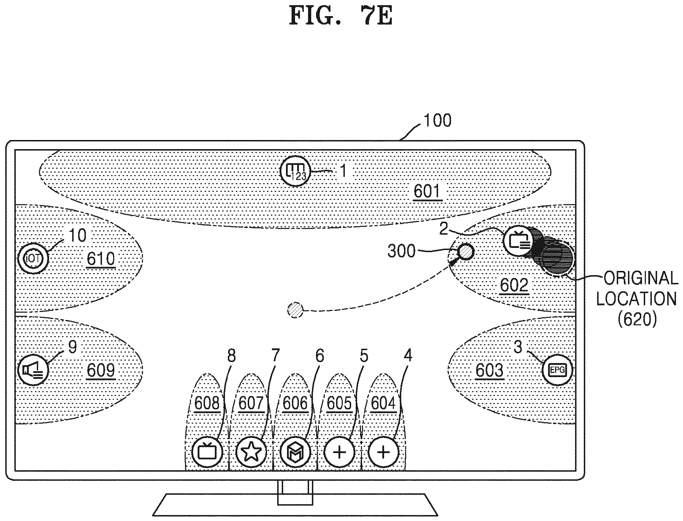

FIG. 7E is a diagram illustrating an example operation when the cursor 300 enters a boundary of an object region 602 according to an example embodiment of the present disclosure.

Referring to FIG. 7E, when a user moves the control device 200 to move the cursor 300 toward the object 2, the display device 100 may detect that the cursor 300 enters the previously determined object region 602 with respect to the object 2. When the display device 100 detects the cursor 300 to have entered the object region 602 corresponding to the object 2, the display device 100 may move the object 2 toward the cursor 300 from an original location 620.

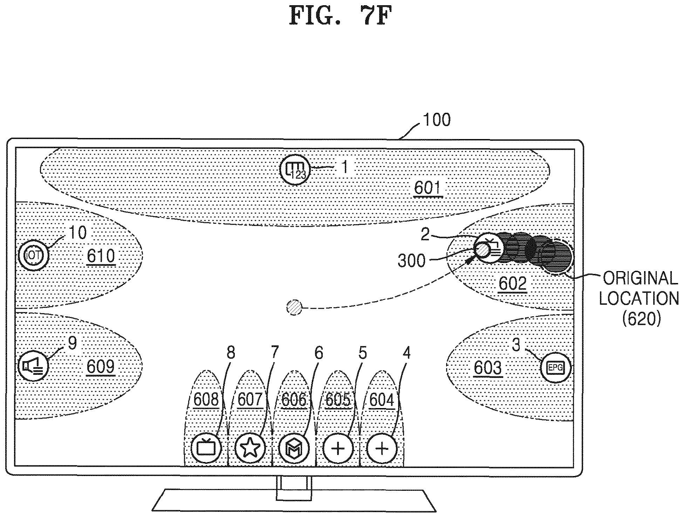

FIG. 7F is a diagram illustrating an example operation when the cursor 300 enters the object region 602 according to an example embodiment of the present disclosure.

Referring to FIG. 7F, if a user moves the control device 200 to move the cursor 300 in the object region 602, the display device 100 may display the object 2 to follow the cursor 300.

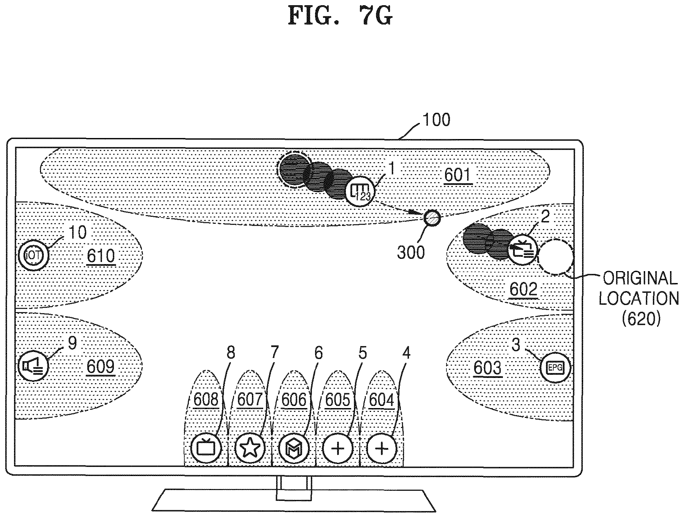

FIG. 7G is a diagram illustrating an example operation when the cursor 300 escapes from the object region 602 and enters a boundary of another object region 601 according to an example embodiment of the present disclosure.

Referring to FIG. 7G, if a user moves the control device 200 to escape the cursor 300 from the object region 602, the display device 100 may detect that the cursor 300 has escaped from the object region 602. In response to a detection that the cursor 300 has escaped from the object region 602, the display device 100 may move the object 2 toward the original location 620. Also, as illustrated in FIG. 7G, when the display device 100 detects that the cursor 300 that has escaped from the object region 602 enters the object region 601 corresponding to the object 1, the display device 100 may move the object 1 toward the cursor 300 that has entered the object region 601.

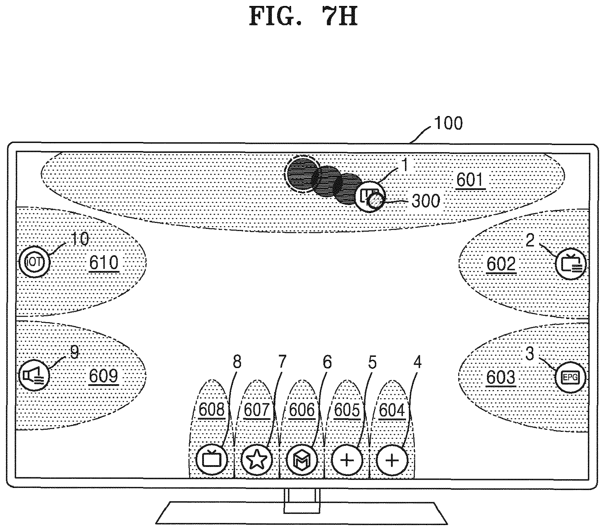

FIG. 7H is a diagram illustrating an example operation when the cursor 300 completely enters the object region 601 and the object 602 goes back to the original location 620, according to an example embodiment of the present disclosure.

Referring to FIG. 7H, in response to a detection that the cursor 300 moves in the object region 601, the display device 100 may display the object 1 as following the cursor 300. Also, since the cursor 300 is no longer within the object region 602, the object 2 may be displayed at the original location 620. As described above, when a plurality of objects are displayed on a display screen of the display device 100 and object regions corresponding to the respective objects are defined, the display device 100 may display an object, which corresponds to an object region in which the cursor 300 moves, as following the cursor 300. Thus, when the plurality of objects are displayed as illustrated in FIG. 7H, the user may not need to precisely move the cursor 300 to a location of the object so as to select each object. Even if the user moves the cursor 300 around an object desired to be selected, since the object actively follows the cursor 300 like a magnet, the user may more easily select the object.

As described above, according to the embodiments, seamless user interface feedbacks may be provided between a plurality of control devices controlling a display device, thereby informing a user of a feedback start location upon manipulation through each input device.

A display method according to an example embodiment may be written as program commands executable via any computer means and recorded in a non-transitory computer-readable recording medium or a computer program product. The non-transitory computer-readable recording medium may include a program command, a data file, and a data structure solely or in combination. Program commands recorded in the non-transitory computer-readable recording medium may be specifically designed and configured for the disclosure, or may be well known to and usable by one of ordinary skill in the art of computer software. Examples of the non-transitory computer-readable recording medium include magnetic media (e.g., hard disks, floppy disks, and magnetic tapes), optical media (e.g., CD-ROMs and DVDs), magneto-optical media (e.g., floptical disks), and hardware devices specifically configured to store and execute program commands (e.g., ROMs, RAMs, and flash memories). Examples of program commands include not only machine language codes prepared by a compiler, but also high-level language codes executable by a computer by using an interpreter.

It should be understood that various example embodiments described herein should be considered in a descriptive sense only and not for purposes of limitation. Descriptions of features or aspects within each embodiment should typically be considered as available for other similar features or aspects in other embodiments.

While one or more example embodiments have been described with reference to the figures, it will be understood by those of ordinary skill in the art that various changes in form and details may be made therein without departing from the scope as defined by the following claims.

## Claims

1. A display device comprising:
a display; and
a controller configured to display a cursor at a location on the display corresponding to an input for controlling the display device, to detect that the cursor has entered an object region corresponding to an original location of an object displayed on the display, and to move the object toward the cursor that has entered the object region in response to detecting that the cursor has entered the object region.

2. The display device of claim 1, wherein the controller is further configured to control the object to follow the cursor that moves in the object region.

3. The display device of claim 1 or 2, wherein the controller is further configured to control the object to overlay the cursor that has stopped in the object region.

4. The display device of any one of claims 1 to 3, wherein the controller is further configured to detect that the cursor has exited the object region, and to control the object move to an original location in response to detecting that the cursor has exited the object region.

5. The display device of any one of claims 1 to 4, wherein the object region comprises a region within a predetermined distance from an original location of the object displayed on the display.

6. The display device of any one of claims 1 to 5, wherein the controller is further configured to display the object at a determined location on the display in response to an input of a control device.

7. The display device of any one of claims 1 to 6, wherein the controller is further configured to remove the display of the cursor on the display in response to detecting that a predetermined time has elapsed without the cursor entering the object region.

8. A display method comprising:
displaying a cursor at a location on a display corresponding to an input of a control device controlling a display device;
detecting that the cursor has entered an object region corresponding to an original location of an object displayed on the display; and
moving the object toward the cursor that has entered the object region in response to detecting that the cursor has entered the object region.

9. The method of claim 8, further comprising: controlling the object to follow the cursor that moves in the object region.

10. The method of claim 8 or 9, further comprising: controlling the object to overlay the cursor that has stopped in the object region.

11. The method of any one of claims 8 to 10, further comprising:
detecting that the cursor has exited the object region; and
controlling the object to move to an original location in response to detecting that the cursor has exited the object region.

12. The method of any one of claims 8 to 11, wherein the object region comprises a region within a predetermined distance from an original location of the object displayed on the display.

13. The method of any one of claims 8 to 12, further comprising: displaying the object at a determined location on the display in response to an input of the control device.

14. The method of any one of claims 8 to 13, further comprising: removing the display of the cursor on the display in response to detecting that a predetermined time has elapsed without the cursor entering the object region.

15. A non-transitory computer readable storage medium having stored thereon a program, which when executed by a computer, causes a display device to perform operations comprising:
displaying a cursor at a location on a display corresponding to an input of a control device controlling a display device;
detecting that the cursor has entered an object region corresponding to an original location of an object displayed on the display; and
moving the object toward the cursor that has entered the object region in response to detecting that the cursor has entered the object region.
